# FASCICULE DE BREVET EUROPEEN

(11) **EP 4 363 313 B1**
(45) Date de publication et mention de la délivrance du brevet: **12.02.2025**
(21) Numéro de dépôt: 22743537.7
(22) Date de dépôt: 24.06.2022
(51) Int. Cl.: B64C 11/30, F01D 7/00, F01D 21/16

(54) **HELICE POUR UNE TURBOMACHINE D'AERONEF AVEC UNE AUBE A CALAGE VARIABLE ET UN DISPOSITIF DE CONTREPOIDS A ENGRENAGE**
PROPELLER FÜR EINE TURBOMASCHINE EINES LUFTFAHRZEUGES MIT EINER VERSTELLBAREN SCHAUFEL UND EINER GEGENGEWICHTSVORRICHTUNG MIT ZAHNRADGETRIEBE
PROPELLER FOR AN AIRCRAFT TURBOMACHINE WITH A VARIABLE BLADE PITCH AND A GEARED COUNTERWEIGHT DEVICE

(30) Priorité: 30.06.2021 FR 2107085
(43) Date de publication de la demande: 08.05.2024
(73) Titulaire: SAFRAN AIRCRAFT ENGINES, 75015 Paris (FR)
(72) Inventeur: BELJAMBE, Ceddric, 77550 MOISSY-CRAMAYEL (FR); COTTET, Clément, 77550 MOISSY-CRAMAYEL (FR); RODA, Jean Charles Olivier, 77550 MOISSY-CRAMAYEL (FR); TRIBOUT, Kevin Franck Jacques, 77550 MOISSY-CRAMAYEL (FR)
(74) Mandataire: Gevers & Orès
(86) Numéro de dépôt international: PCT/FR2022/051250
(87) Numéro de publication internationale: WO 2023/275466

(56) Documents cités:
- FR-A1- 3 009 710
- FR-A1- 3 057 909
- FR-A1- 3 067 075

## Description

### Domaine technique de l'invention

La présente invention concerne le domaine des turbomachines d'aéronef et en particulier des hélices propulsives de ces turbomachines qui comportent des aubes à calage variable avec un dispositif de contrepoids à engrenage.

### Arrière-plan technique

L'état de la technique comprend notamment les documents FR-A1-3 009 710 et FR-A1-3 057 909.

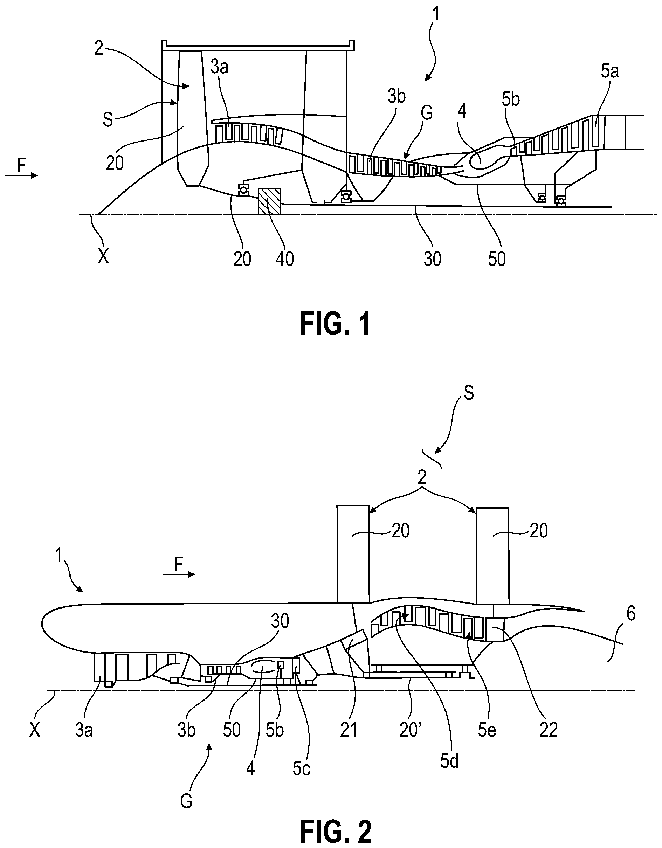

Une hélice de turbomachine d'aéronef peut être carénée (figure 1), comme c'est le cas d'une soufflante par exemple, ou non carénée (figure 2) comme c'est le cas d'une architecture du type open-rotor par exemple.

Une hélice comprend des aubes qui peuvent être à calage variable. La turbomachine comprend alors un mécanisme permettant de modifier l'angle de calage des aubes afin d'adapter la poussée générée par l'hélice en fonction des différentes phases de vol. Le calage angulaire des aubes d'hélice permet également d'optimiser le rendement de l'hélice en fonction de la vitesse de l'aéronef et d'optimiser la marge au pompage de la turbomachine pour réduire sa consommation de carburant dans les différentes phases de vol.

Pour rappel, l'angle de calage d'une aube d'hélice correspond à l'angle, dans un plan longitudinal perpendiculaire à l'axe de rotation de l'aube d'hélice, entre la corde d'aube et le plan de rotation de la soufflante ou du moteur de la turbomachine. Les aubes d'hélice à calage variable peuvent occuper une position dite d'inversion de poussée (connue sous le terme anglais « reverse ») dans laquelle celles-ci permettent de générer une contre poussée de manière à participer au ralentissement de l'aéronef et une position de mise en drapeau dans laquelle, en cas de défaillance ou de panne, celles-ci permettent de limiter leur résistance aérodynamique et/ou de trainée. Les conséquences de cette trainée pouvant être de l'ordre de la sécurité du vol en cas de perte de contrôle de l'aéronef si la dérive de celui-ci n'est pas dimensionné pour, et pouvant être de la performance pour la durée possible du vol de déroutement sur un seul moteur.

De multiples dispositifs ont été imaginés pour faire varier le calage des aubes d'hélice, qui comportent généralement une mise en rotation de l'aube autour de son axe principal (correspondant à un axe de calage de l'aube) par l'intermédiaire d'un système de commande situé radialement à l'intérieur des pieds des aubes. Ce système de commande comprend par exemple un actionneur qui peut être relié aux pieds des aubes par des bielles et/ou une tringlerie.

Une des contraintes du système de commande du calage des aubes d'hélice, est d'amener les aubes dans la position prédéterminée, dite de « position drapeau » dans le cas d'une défaillance de ce système de calage. La mise en drapeau permet notamment de minimiser la traînée aérodynamique.

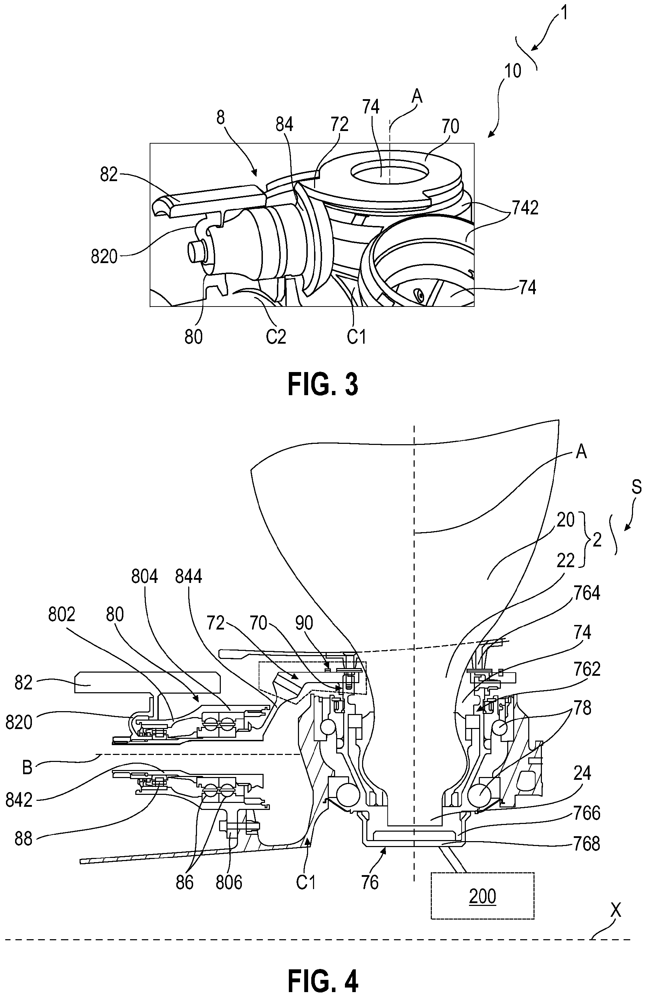

Classiquement le rappel en drapeau est assuré par des dispositifs de contrepoids dits directs dont l'inertie, très supérieure à celle des aubes d'hélice, doit garantir le retour de ces dernières dans la position de drapeau définie au préalable. Un dispositif de contrepoids est en général associé à chacune des aubes. Le dispositif de contrepoids peut comprendre un arbre mobile en rotation par exemple autour d'un axe perpendiculaire à l'axe de calage de l'aube. Selon le type d'engrenage du dispositif de contrepoids, l'engrenage peut être perpendiculaire et/ou concurrant à l'axe de calage de l'aube. De manière classique, l'engrenage à pignons coniques du dispositif de contrepoids s'étend suivant un axe au moins concurrant avec l'axe de calage de l'aube. L'arbre mobile du dispositif de contrepoids est relié à une masselotte et donc à un pignon conique qui est engrené avec une portion de roue dentée solidaire en rotation de l'aube (figure 3). L'arbre est en général centré et guidé en rotation par au moins un palier par exemple à roulement à billes (figure 4).

Cependant, un grippage du pignon conique ou d'un des paliers du dispositif de contrepoids peut entrainer le blocage de la cinématique du dispositif de contrepoids. Pour éviter de bloquer l'ensemble du mécanisme de changement de pas d'aube, il peut être nécessaire d'ajouter une section dite fusible. Cette section fusible peut être associée au système de commande. A titre d'exemple, la section fusible peut être sur une des bielles de liaison à l'actionneur ou sur la tringle de liaison à l'actionneur. Cependant, cette solution présente le désavantage de perdre l'actionnement d'une des aubes qui reste bloquée dans sa position courante de fonctionnement. Ce blocage peut entraîner un balourd mécanique et aérodynamique, et peut conduire à une mise en drapeau dite active et à des incidents en vol tel qu'un IFSD (*In Fligth Shut Down*). Ceci peut de manière générale limiter l'opérabilité et les performances de la turbomachine et de l'aéronef.

Dans ce contexte, il est intéressant de pallier les inconvénients de l'art antérieur, en intégrant une fonction de sécurité simple et efficace sur une aube à calage variable et son dispositif de contrepoids.

### Résumé de l'invention

La présente invention propose une solution simple, efficace et économique à au moins une partie des problèmes précités.

A cet effet, l'invention concerne un ensemble pour une hélice de turbomachine d'aéronef, l'ensemble comportant :
- une aube à calage variable comportant une pale reliée à un pied, l'aube comportant un axe longitudinal confondu avec un axe A de calage de l'aube qui passe par ledit pied,
- une embase solidaire en rotation de l'aube autour de l'axe de calage A et reliée à une portion de roue dentée s'étendant autour de cet axe de calage A, et
- un dispositif de contrepoids comportant un arbre mobile en rotation autour d'un axe B sensiblement concourrant et perpendiculaire audit axe de calage A, cet arbre étant relié à au moins une masselotte et à une portion de pignon engrenée avec la portion de roue dentée.

Selon l'invention, la portion de roue dentée est fixée à ladite embase par au moins une vis fusible.

L'axe B peut être sensiblement perpendiculaire et/ou concurrant à l'axe de calage A.

L'intégration d'au moins une vis fusible permet à la portion de roue dentée de se désolidariser de l'embase solidaire en rotation de l'aube à calage variable en cas de panne du dispositif de contrepoids. Plus particulièrement, lorsque la cinématique du dispositif de contrepoids est bloquée (telle que par un grippage du pignon conique ou des paliers), une force importante est appliquée sur la portion de roue dentée engrenée par l'intermédiaire du pignon du dispositif de contrepoids, de façon à ce que la vis fusible se rompt. A titre d'exemple, la vis fusible est dimensionnée pour se rompre par une surcontrainte de rupture en cisaillement et/ou en traction qui est exercée par le pignon du dispositif de contrepoids bloqué. La rupture et la désolidarisation de la portion de roue dentée de l'embase permet de libérer la cinématique d'actionnement de pas de l'ensemble des aubes pour ne pas donc bloquer l'ensemble du mécanisme de changement de pas. Ce qui permet d'éviter un balourd mécanique et aérodynamique sur l'aube par le dispositif de contrepoids bloqué. Par conséquent, l'aube à calage variable et son embase sont sécurisées efficacement en cas de défaillance du dispositif de contrepoids associé.

L'ensemble selon l'invention peut comprendre une ou plusieurs des caractéristiques suivantes, prises isolément les unes des autres, ou en combinaison les unes avec les autres :
- la portion de roue dentée est fixée à ladite embase par plusieurs vis fusibles ;
- la ou chaque vis fusible s'étend suivant un premier axe d'allongement Y qui est parallèle audit axe de calage A ;
- la ou chaque vis fusible comprend une première tête en appui sur ladite portion de roue dentée, et un premier corps qui traverse des premiers orifices de cette portion et de l'embase ;
- ledit premier corps comprend un premier tronçon fileté et vissé dans le premier orifice de l'embase, qui est taraudé, et un second tronçon définissant une plus petite section du premier corps ;
- le second tronçon comprend une rainure annulaire ;

-- ladite rainure annulaire présente un second ou troisième diamètre D2, D3 inférieur à un premier diamètre du premier corps et une première ou seconde épaisseur variable, les diamètres D1 à D3 étant mesurés par rapport à un axe perpendiculaire à l'axe Y et les épaisseurs E1, E2 étant mesurées par rapport à l'axe Y ;

- le second tronçon comprend au moins un trou ;
- l'ensemble comprend en outre au moins une vis de rétention de la portion de roue dentée sur l'embase, la ou chaque vis de rétention étant non fonctionnelle tant que ladite au moins une vis fusible est non rompue et la ou chaque vis de rétention étant fonctionnelle lorsque ladite au moins une vis fusible est rompue,
- la ou chaque vis de rétention comprend une seconde tête qui est configurée, d'une part, pour être à distance de la portion de roue dentée lorsque ladite au moins une vis fusible est non rompue, et d'autre part, pour être apte à venir en appui et retenir la portion de roue dentée lorsque ladite au moins une vis fusible est rompue ;
- la ou chaque vis de rétention s'étend suivant un second axe d'allongement Z qui est parallèle audit axe de calage A ;
- la ou chaque vis de rétention comprend un second corps qui traverse des seconds orifices de la portion de roue dentée et de l'embase ;
- ledit second corps comprend un troisième tronçon fileté et vissé dans le second orifice de l'embase, qui est taraudé, et un quatrième tronçon non fileté engagé dans le second orifice de la portion de roue dentée ;
- les vis fusibles sont en quinconce avec les vis de rétention.

La présente invention concerne également une hélice pour une turbomachine, en particulier d'aéronef, comportant plusieurs ensembles tels que décrit ci-dessus.

L'hélice peut être une hélice carénée ou une hélice non carénée.

La présente invention concerne également une turbomachine non revendiqué, en particulier d'aéronef, comportant au moins une hélice ou plusieurs ensembles tels que décrit ci-dessus.

La turbomachine peut être un turboréacteur ou un turbopropulseur.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique partielle en coupe longitudinale d'une turbomachine pour aéronef comportant une hélice carénée,
[Fig.2] la figure 2 est une vue schématique partielle en coupe longitudinale d'une turbomachine pour aéronef comportant deux hélices non carénées,
[Fig.3] la figure 3 est une vue schématique en perspective d'un ensemble comportant un dispositif de contrepoids et une embase d'une aube d'hélice de la figure 1 ou de la figure 2,
[Fig.4] la figure 4 est une vue schématique en coupe longitudinale de l'ensemble de la figure 3,
[Fig.5a] la figure 5a est une vue schématique en perspective d'une vis fusible selon un premier mode de réalisation de l'invention,
[Fig.5b] la figure 5b est une vue schématique en perspective d'une vis fusible selon un second mode de réalisation de l'invention,
[Fig.5c] la figure 5c est une vue schématique en perspective d'une vis fusible selon un troisième mode de réalisation de l'invention,
[Fig.6] la figure 6 est une vue schématique agrandie et partielle en coupe longitudinale de la vis fusible assemblé dans l'ensemble de la figure 4 selon un premier mode de réalisation de l'invention,
[Fig.7] la figure 7 est une vue schématique en perspective d'une vis de rétention selon l'invention,
[Fig.8] la figure 8 est une vue schématique agrandie et partielle en coupe longitudinale de la vis fusible et de la vis de rétention assemblés dans l'ensemble de la figure 4 selon un second mode de réalisation de l'invention,
[Fig.9] la figure 9 est une vue schématique partielle en perspective de l'ensemble de la figure 8,
[Fig.10] la figure 10 est une vue schématique agrandie et partielle en coupe longitudinale de la vis fusible et de la vis de rétention assemblés dans l'ensemble selon un troisième mode de réalisation de l'invention,
[Fig.11] la figure 11 est une vue schématique agrandie et partielle en coupe longitudinale de la vis fusible et de la vis de rétention assemblés dans l'ensemble selon un quatrième mode de réalisation de l'invention.

### Description détaillée de l'invention

Par convention dans la présente demande, les termes « intérieur » et « extérieur », et « interne » et « externe » sont définis radialement par rapport à un axe longitudinal (pouvant correspondre à un axe X longitudinal d'une turbomachine). Ainsi, un cylindre s'étendant selon cet axe longitudinal comporte une face intérieure tournée vers l'axe du moteur et une surface extérieure, opposée à sa surface intérieure. On entend par « axial » ou « axialement » toute direction parallèle à cet axe longitudinal, et par « transversalement » ou « transversal » toute direction perpendiculaire à cet axe longitudinal. De même, les termes « amont » et « aval » sont définis par rapport au sens de circulation de l'air dans la turbomachine qui est représenté par une flèche F.

De façon classique, une turbomachine 1 (figure 1 ou 2) comprend un générateur de gaz G (ou moteur) en amont duquel est monté un module de soufflante S. La turbomachine 1 s'étend suivant un axe longitudinal X.

De manière générale et dans la suite de la description, le terme « module de soufflante » est employé pour désigner indifféremment une soufflante ou une hélice, les aubes de la soufflante ou de l'hélice pouvant être carénées (par exemple pour les turboréacteurs à double flux de la figure 1) ou non carénées (par exemple pour les turbopropulseurs de la figure 2).

Les figures 1 et 2 illustrent donc deux types de turbomachine 1 destinés chacune à être monté sur un aéronef.

Plus particulièrement, la figure 1 illustre schématiquement une turbomachine 1 à double flux comportant un module de soufflante S ayant une hélice propulsive carénée. Le générateur de gaz G de la turbomachine 1 comporte, d'amont en aval, un compresseur basse pression 3a, un compresseur haute pression 3b, une chambre annulaire de combustion 4, une turbine haute pression 5b, une turbine basse pression 5a et une tuyère d'échappement 6. La figure 2 illustre schématiquement une turbomachine 1 de type « open-rotor » comportant un module de soufflante S ayant des hélices propulsives non carénées. Sur l'exemple de la figure 2, le module de soufflante S est en aval du générateur de gaz G. En variante (non illustrée), le module de soufflante S à doublet d'hélice peut être en amont du générateur de gaz G de la turbomachine. Le générateur de gaz G de la turbomachine 1 comporte, d'amont en aval, un compresseur basse pression 3a, un compresseur haute pression 3b, une chambre annulaire de combustion 4, une turbine haute pression 5b, une turbine de pression intermédiaire 5c, des première et seconde turbines libres de puissance 5d, 5e et une tuyère d'échappement 6. Les première et seconde turbines libres 5d, 5e forment un doublet de turbines contrarotatives pour entraîner les hélices S non carénées en contre-rotation. Des premier et second dispositifs structuraux tournants 21, 22 sont situés axialement entre les premier et second turbines libres 5d, 5e. Chaque dispositif structural tournant 21, 22 est relié à l'une des hélices S et à un arbre fixe 20'. Cet arbre fixe 20' est centré sur l'axe X et forme un carter fixe de réception des turbines libres 5d, 5e. Sur l'exemple des figures 1 et 2, le compresseur haute pression 3b et la turbine haute pression 5b sont reliés par un arbre haute pression 50 et forment avec lui un corps haute pression (HP). Le compresseur basse pression 3a et la turbine basse pression 5a ou la turbine de pression intermédiaire 5c sont reliés par un arbre basse pression 30 et forment avec lui un corps basse pression (BP).

Sur la figure 1, la soufflante S est entraînée par un arbre de soufflante 20 qui est couplé à l'arbre BP 30 au moyen d'un réducteur de vitesse 40. Alors que dans la figure 2, des gaz de la veine primaire s'échappant de la turbine intermédiaire 5c assurent la mise en rotation des turbines libres 5d, 5e, des dispositifs structuraux tournants 21, 22 et donc des hélices S.

L'invention s'applique d'une manière générale à une hélice ou une soufflante S qui est carénée (figure 1) ou non carénée (figure 2).

L'hélice ou la soufflante S comprend une pluralité d'aubes 2 à calage variable. Chaque aube 2 comprend une pale 20 reliée à un pied 22 (figure 4). La pale 20 présente un profil aérodynamique et comprend un intrados et un extrados qui sont reliés par un bord amont d'attaque et par un bord aval de fuite (non illustrés). La pale 20 a une extrémité supérieure qui est libre, appelée sommet, et une extrémité inférieure qui est reliée au pied 22.

Le pied 22 définit un axe de calage A qui correspond sensiblement à un axe longitudinal de l'aube 2 et de la pale 20. L'axe de calage A est un axe autour duquel la position angulaire de l'aube 2 est ajustée. Cet axe A est aussi en général un axe radial (sensiblement perpendiculaire à l'axe X) qui s'étend donc suivant un rayon par rapport à l'axe de rotation de l'hélice S équipée de cette aube 2.

La position angulaire de chacune des pales 20 autour de leur axe A peut être assurée par un système de commande 200 de l'hélice S. Le système de commande 200 peut comprendre un actionneur unique pour toutes les aubes 2 de l'hélice. A titre d'exemple, cet actionneur (non-illustré) peut être relié à des bielles aux pieds 22 ou à une tringle qui agit sur des pignons fixés sur les aubes 2, notamment en entourant les pieds 22.

L'hélice S comprend également un anneau polygonal C1 servant de support des pales 20, cet anneau C1 formant un moyeu d'hélice (figures 3 et 4). L'anneau polygonal C1 peut être relié à un carter C2 ou une structure fixe de la turbomachine 1. L'anneau C1 comporte une pluralité de logements 74 espacés circonférentiellement les uns des autres, ces logements 74 étant des logements radiaux (par rapport à l'axe X). Chacun des logements 74 s'étend autour de l'axe A et configuré pour recevoir un support 76 de pied 22 d'aube.

Sur la figure 4, le support 76 comprend une paroi annulaire 762. Cette paroi annulaire 762 comporte une extrémité inférieure 766 fermée par une paroi de fond 768, et une extrémité axiale supérieure 764 ouverte et configurée pour autoriser le montage du pied 22 de l'aube 2 à l'intérieur du logement 74. La paroi de fond 768 est configurée pour coopérer par complémentarité de formes avec une extrémité libre 24 du pied 22, de façon à ce que le logement 74 soit solidarisé en rotation avec le pied 22 autour de l'axe A.

Des premiers paliers 78 sont intercalés entre chaque logement 74 et la paroi annulaire 762 du support 76 du pied d'aube, pour notamment assurer le centrage et le guidage du support 76 autour de l'axe A vis-à-vis de l'anneau polygonal C1 et/ou une structure fixe de la turbomachine 1.

En référence aux figures 3 et 4, l'hélice S comprend plusieurs ensembles 10. Dans la présente demande, on entend par un ensemble 10, une partie des éléments composant l'hélice S. Ainsi, un ensemble 10 comporte une aube 2 à calage variable, une embase 70 et un dispositif de contrepoids 8 associés à l'aube 2.

L'embase 70 de chaque ensemble 10 est configurée pour être solidaire en rotation de l'aube 2 autour de l'axe A. Sur l'exemple de la figure 4, l'embase 70 est montée sur la paroi annulaire 762 de chaque support 76 et au-dessus de chaque logement 74.

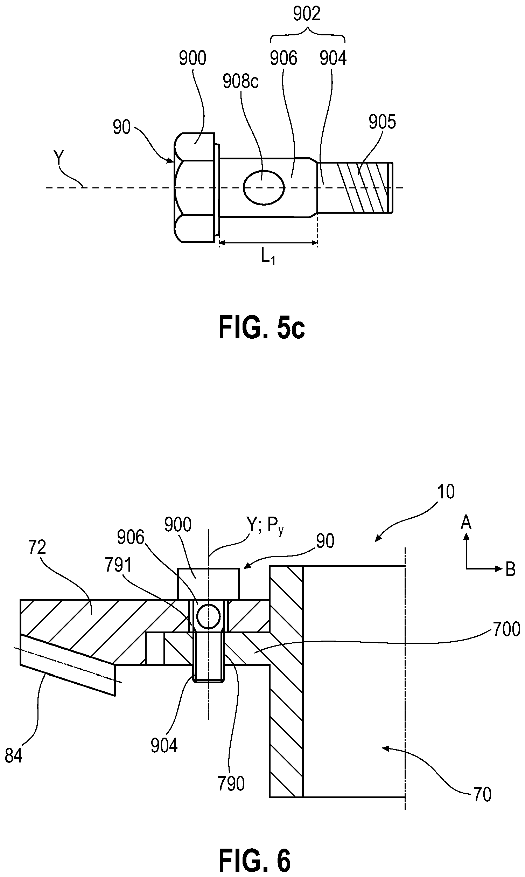

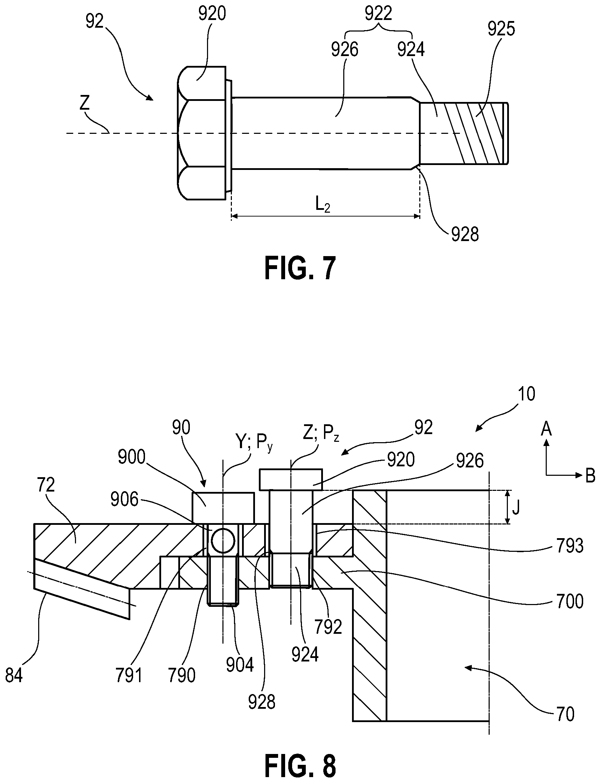

Sur l'exemple des figures 6, 8 et 9, l'embase 70 comprend une extension 700 qui s'étend sensiblement perpendiculaire à l'axe A. Cette extension 700 est un prolongement radial (par rapport à l'axe A) du corps de l'embase 70. L'extension 700 comprend au moins un premier orifice 790 passant par un premier plan P_{Y} (figures 6 et 8). L'extension 700 peut également comprendre au moins un second orifice 792 passant par un second plan Pz (figure 8). Les premier et second plans P_{Y}, Pz sont sensiblement parallèles à l'axe A. Le premier plan P_{Y} peut être en amont du second plan Pz et/ou inversement.

L'embase 70 est reliée à une portion de roue dentée 72 qui s'étend également autour de l'axe A. Sur l'exemple de la figure 3, cette portion 72 peut être un secteur angulaire s'étendant circonférentiellement autour de l'axe A. Le secteur angulaire de la portion 72 peut être compris entre 30° et 150°, de préférence entre 90° et 130°. Le secteur angulaire de la porton 72 peut varier en fonction de la plage de calage de l'axe de calage de l'aube en fontion d'une hélice carénée ou d'une hélice non-carénée. La portion 72 de roue dentée peut comprendre des dentures configurées pour s'engrener avec des dentures du dispositif de contrepoids 8. Cette portion 72 peut donc êtreconique.

Sur l'exemple des figures 6, 8 et 9, la portion 72 comprend au moins un premier orifice 791 passant par le premier plan P_{Y}. La portion 72 peut également comprendre au moins un second orifice 793 passant par le second plan Pz. Sur les exemples, les premiers orifices 790, 791 de de l'embase 70 et de la portion 72 sont alignés par rapport au premier plan P_{Y} et les seconds orifices 792, 793 sont alignés par rapport au second plan Pz. Le dispositif de contrepoids 8 de chaque ensemble 10 comprend un arbre 80 relié à au moins une masselotte 82 et à une portion de pignon 84.

La portionde pignon 84 (ou pignon 84) peut être de forme conique. Sur l'exemple de la figure 4, la portion de pignon 84 comprend un tronçon amont 842 cylindrique et un tronçon aval 844 évasé en direction de l'embase 70. Le tronçon amont 842 présente donc un diamètre inférieur au tronçon aval 844. La portion de pignon 84, et en particulier le tronçon aval 844, peut comprendre des dentures aptes à s'engrener avec les dentures de la portion 72 de roue dentée, notamment conique. Ainsi, l'ensemble 10 peut comprendre une portion de pignon dentée 72 du support 76 du pied d'aube et une portion de pignon dentée 84 sur l'arbre 80 du dispositif de contrepoid. La proportion des portions de pignon peut être égale au rapport de réduction (ou rapport de transmission) entre les vitesses de rotation de l'arbre du dispositif de contrepoids et de l'aube.

L'arbre 80 est mobile en rotation autour d'un axe B qui est sensiblement perpendiculaire à l'axe A (et sensiblement parallèle à l'axe X). Sur l'exemple de la figure 4, l'arbre 80 est une pièce cylindrique et creuse. L'arbre 80 comprend une première portion cylindrique 802 et une seconde portion cylindrique 804. Le tronçon amont 842 de la portion de pignon 84 s'étend à l'intérieur des première et seconde portions 802, 804. Des seconds paliers 86 sont intercalés entre la seconde portion 804 de l'arbre 80 et le tronçon amont 842 de la portion de pignon 84. Un troisième palier 88 est intercalé entre la première portion 802 de l'arbre 80 et le tronçon amont 842 du pignon 84. Les seconds et troisième paliers 86, 88 sont disposés autour du tronçon amont 842 de la portion du pignon 84. Les seconds paliers 86 et/ou le troisième palier 88 peuvent être du type à roulement à billes (figure 4), des roulements à aiguilles ou d'autres technologie de palier. Les paliers à roulement à aiguilles sont plus petits et plus légers par rapport aux sollicitations de l'arbre du dispositif de contrepoids. Ces paliers 86, 88 permettent de centrer et de guider l'arbre 80 et la portion de pignon 84 autour de l'axe B vis-à-vis de l'anneau polygonal C1. L'arbre 80 peut être bridé à l'anneau C1 par une bride 806 qui s'étend radialement vers l'intérieur de l'axe X.

Sur l'exemple des figures 3 et 4, la masselotte 82 est reliée à l'arbre 80 et au pignon 84 par un clip 820. La masselotte 82 s'étend radialement vers l'extérieur de l'axe B.

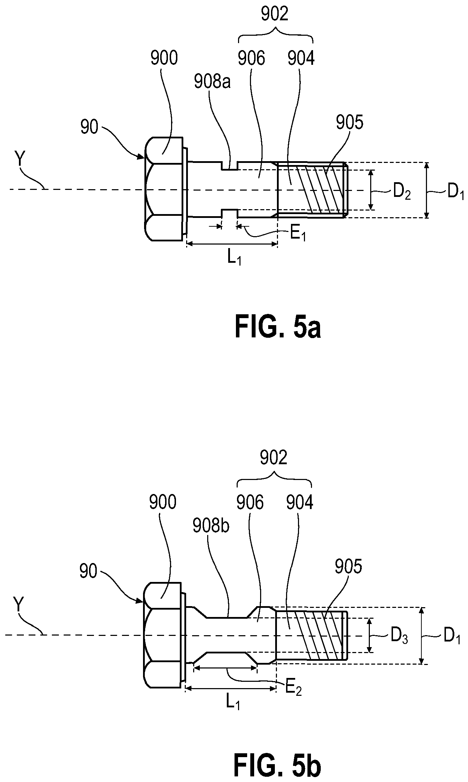

L'une des particularités de l'invention est que la portion 72 de roue dentée est fixée à l'embase 70 par au moins une ou plusieurs vis fusibles 90. Les figures 5a à 5c illustrent plusieurs modes de réalisation de la vis fusible 90.

La figure 5a illustre un premier mode de réalisation de la vis fusible 90. La vis fusible 90 est une pièce de révolution cylindrique s'étendant autour d'un premier axe d'allongement Y. Cet axe Y correspond à un axe de vissage de la vis fusible 90. Cet axe Y est sensiblement parallèle à l'axe A. La vis fusible 90 comprend une première tête 900 et un premier corps 902. Le premier corps 902 a une forme cylindrique et présente un premier diamètre externe D1. Le diamètre externe D1 est mesuré par rapport à un axe radial perpendiculaire à l'axe Y. Le corps 902 comprend un premier tronçon 904 et un second tronçon 906 (appelé également par le terme « fût »). Le premier tronçon 904 peut comprendre un filetage 905. Le second tronçon 906 peut présenter une première longueur L1 mesurée par rapport à l'axe Y. Le second tronçon 906 est configuré donc pour former une zone privilégiée de rupture en cissaillement et/ou en traction. Plus particulièrement, le second tronçon 906 peut présenter une section plus petite que le premier corps 902. Pour cela, le second tronçon 906 peut comprendre une rainure annulaire 908a. Cette rainure annulaire 908a a un second diamètre externe D2 inférieur à D1. La rainure annulaire 908a présente une première épaisseur E1 mesurée par rapport à l'axe Y.

La figure 5b illustre un second mode de réalisation de la vis fusible 90. Cette vis fusible 90 de la figure 5b diffère de celle de la figure 5a par le second tronçon 906. Le second tronçon 906 du second mode de réalisation comprend également une rainure annulaire 908b qui est profonde. Cette rainure annulaire 908b a un troisième diamètre externe D3 inférieur à D2. La rainure annulaire 908b présente une seconde épaisseur E2 supérieure à E1.

La figure 5b illustre un troisième mode de réalisation de la vis fusible 90. Cette vis fusible 90 de la figure 5c diffère de celle des figures 5a et 5b également par le second tronçon 906. Le second tronçon 906 du troisième mode de réalisation comprend au moins un trou 908c de dimension variable.

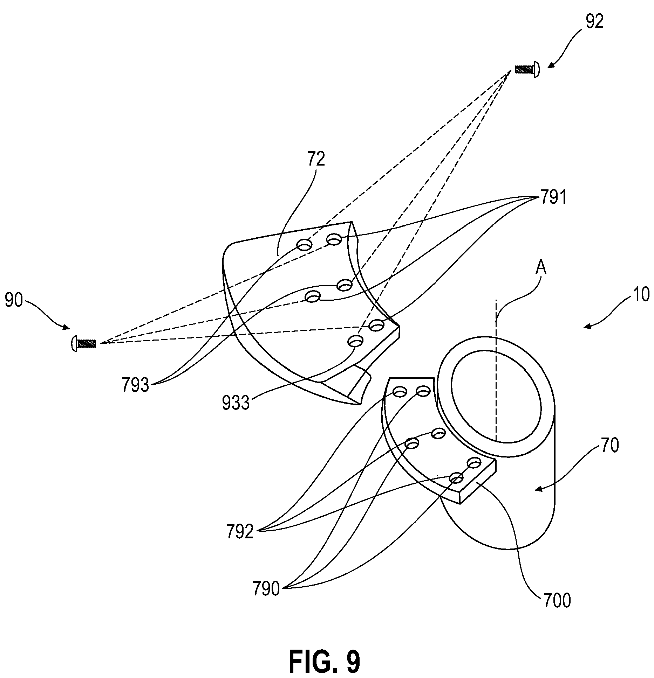

La présente demande décrit maintenant la vis fusible 90 montée dans l'ensemble 10 de l'invention en référence à la figure 6. En variante, plusieurs vis fusible 90 peuvent relier l'embase 70 et la portion 72 de roue dentée. A titre d'exemple, les vis fusibles 90 peuvent être au nombre de deux à dix. De préférence, la portion 72 et l'embase 70 sont reliées par environ deux ou trois vis fusibles 90 (figure 9).

Plus particulièrement, la ou les vis fusibles 90 sont vissées dans les premiers orifices 790, 791 de l'embase 70 et de la portion 72 de roue dentée. L'axe Y de chaque vis fusible 90 est donc confondu avec le premier plan P_{Y} de chacun des premiers orifices 790, 791.

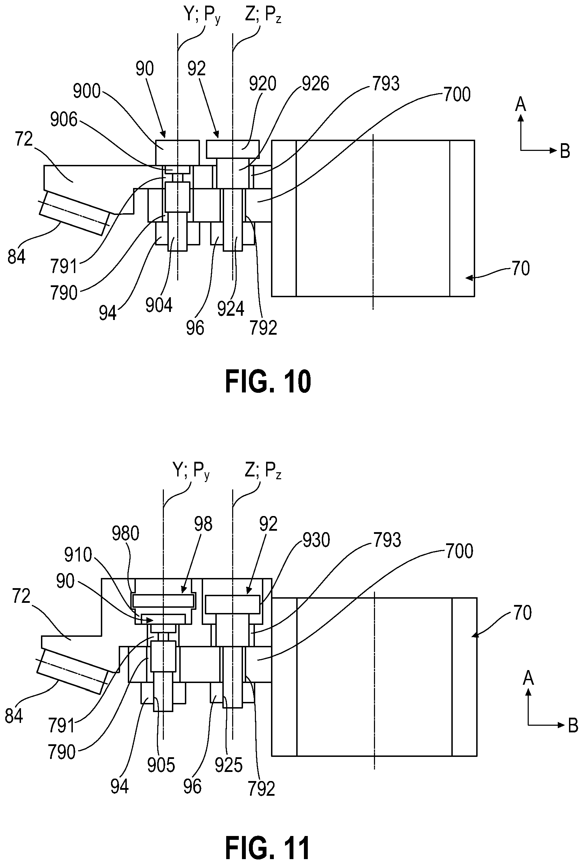

La première tête 900 de la vis fusible 90 est en appui sur la portion 72 de roue dentée. Le premier corps 902 traverse les premiers orifices 790, 791. Plus particulièrement, le second tronçon 906 est monté dans le premier orifice 791 de la portion 72 de roue dentée, et le premier tronçon 904 est monté dans le premier orifice 790 de l'embase 70, en particulier de l'extension 700. A titre d'exemple, le premier tronçon 904 fileté est vissé de façon complémentaire au taraudage du premier orifice 790 de l'embase 7. En variante illustrée sur les figures 10 et 11, le premier tronçon 904 est monté dans le premier orifice 790 et un premier écrou de serrage 94 peut être vissé sur le filetage 905 du premier tronçon 904 pour verrouiller l'assemblage.

Dans cette configuration de la figure 6, la première tête 900 est en contact direct avec la portion 72 de roue dentée, le second tronçon 906 (présentant la section fusible) est assemblé dans la portion 72 également et le premier tronçon 904 est lié mécaniquement à l'embase 7. En cas de blocage d'au moins un des éléments du dispositif de contrepoids 8, la portion 72 engrenée par la portion de pignon 84 du dispositif de contrepoids 8 transmet un couple (ou une contrainte) supérieur au couple de serrage de la vis fusible 90. En particulier, l'adhérence de contact entre la première tête 900 et la portion 70 provoque la rupture de la section fusible du second tronçon 906 lors de la transmission de couple de la portion 72 sur la vis fusible 90. Ce qui permet de désolidariser l'embase 70 de la portion 72 de roue dentée et du dispositif de contrepoids 8 bloqués. Ce qui empêche de bloquer également l'embase 70 solidaire en rotation de l'aube 2 et l'ensemble du mécanisme de changement de pas de l'aube 2.

Une autre particularité de l'invention réside dans le fait qu'en plus d'au moins une vis fusible 90, l'embase 70 et la portion 72 de roue dentée sont fixées par au moins une vis de rétention 92 (ou vis de fixation ou de retenue).

En référence à la figure 7, la vis de rétention 92 est également une pièce de révolution cylindrique s'étendant autour d'un second axe d'allongement Z. Cet axe Z correspond à un axe de vissage de la vis de rétention 92. Cet axe Z est sensiblement parallèle aux axes A et Y. La vis de rétention 92 comprend une seconde tête 920 et un second corps 922 de forme cylindrique. Le second corps 922 comprend un troisième tronçon 924 et un quatrième tronçon 926 (appelé également par le terme « fût »). Le troisième tronçon 924 peut comprendre un second filetage 925. Le quatrième tronçon 926 peut comprendre un épaulement annulaire 928. Cet épaulement 928 est situé à l'opposé de la seconde tête 920 et relié au troisième tronçon 924. Le quatrième tronçon 926 peut présenter une seconde longueur L2 mesurée par rapport à l'axe Z. De préférence, la seconde longueur L2 est supérieure à la première longueur L1. La seconde tête 920 est configurée pour former une zone privilégiée de maintien de la portion 72 de roue dentée en cas de blocage du dispositif de contrepoids 8 et de désolidarisation de la portion 72 vis-à-vis de l'embase 70.

Par ailleurs, la seconde tête 920 de la vis de rétention 92 peut être décalée par rapport à la portion 72 pour être certain que les efforts de manière nominale passent par les vis fusibles 90 et qu'en cas de grippage ce soit bien les vis fusibles 90 qui cassent. Enfin pour garantir au montage qu'on n'aille pas jusqu'à mettre la seconde tête de vis de rétention en contact avec la portion 72, il est possible de mettre soit un épaulement 928 sur la vis 92, soit aller au fond du taraudage de l'embase 70.

La présente demande décrit maintenant la vis de rétention 92 montée dans l'ensemble 10 de l'invention en référence aux figures 8 et 9. En variante, plusieurs vis de rétention 92 peuvent relier l'extension 700 de l'embase 70 et la portion 72 de roue dentée. De préférence, l'ensemble 10 comprend le même nombre de vis fusible 90 et de vis de rétention 92. A titre d'exemple, les vis de rétention 92 peuvent être au nombre de deux à dix. La figure 9 illustre la portion 72 et l'embase 70 reliées par trois vis de rétention 92 et trois vis fusibles 90.

Plus particulièrement, la ou les vis de rétention 92 sont vissées dans les seconds orifices 792, 793 de l'embase 70 et de la portion 72 de roue dentée. L'axe Z de chaque vis fusible 90 est donc confondu avec le second plan Pz de chacun des seconds orifices 792, 793.

La seconde tête 900 de la vis fusible 90 est distante de la portion 72 de roue dentée. En effet, chaque vis de rétention 92 est montée dans les seconds orifices 792, 793 avec un jeu J minimum entre la seconde tête 900 et la portion 72 de roue dentée. A titre d'exemple, le jeu J est compris entre 1 et 5 mm. De préférence, le jeu J est d'environ 2 mm. Ce jeu J peut être un compromis pour avoir un minimum de balourd pour qu'il soit détectable, et un maximum pour éviter de dégrader la turbomachine. Ainsi, le jeu J peut dépendre de la vitesse de rotation et de la position radiale du dispositif de contrepoids. Le second corps 922 traverse les seconds orifices 792, 793. Plus particulièrement, le quatrième tronçon 926 est monté dans le second orifice 793 de la portion 72 de roue dentée, et le troisième tronçon 924 est monté dans le second orifice 792 de l'embase 70. A titre d'exemple, le troisième tronçon 924 fileté est vissé de façon complémentaire au taraudage du second orifice 792 de l'embase 70. En variante illustrée sur les figures 10 et 11, le troisième tronçon 924 est monté dans le second orifice 792 et un second écrou de serrage 96 peut être vissé sur le filetage 925 du troisième tronçon 924 pour verrouiller l'assemblage.

En référence à la figure 9, les vis fusibles 90 sont disposées en quinconce par rapport aux vis de rétention 92. Ce qui permet de former un polygone de sustentation suffisant pour assurer un équilibre de charges dans les vis 90, 92 et pour obtenir un encombrement réduit.

Dans cette configuration de la figure 8 ou de la figure 9, la seconde tête 920 n'est pas en contact direct avec la portion 72 de roue dentée, le quatrième tronçon 926 est monté dans la portion 72 avec l'épaulement annulaire 928 en appui sur l'embase 70 et le troisième tronçon 924 est lié mécaniquement à l'embase 70. Lorsque la ou les vis fusibles 90 sont non rompues et intacts (notamment en fonctionnement normale sans blocage du dispositif de contrepoids 8), la seconde tête 920 est distante de la portion 72 de roue dentée. Lorsque la ou les vis fusibles 90 sont rompues (notamment en cas de blocage d'au moins un des éléments du dispositif de contrepoids 9), la portion 72 se désolidarise de l'embase 70. La portion 72 désolidarisée vient en butée contre la seconde tête 920. La seconde tête 920 est donc apte à retenir la portion 72 désolidarisée. Ce qui empêche de libérer et projeter la portion 72 désolidarisée (considérée alors comme un débris) dans la turbomachine en fonctionnement.

Les figures 10 et 11 illustrent deux autres variantes de réalisation de l'ensemble 10 de la figure 8.

L'ensemble 10 de la figure 10 diffère de l'ensemble 10 de la figure 8 par l'utilisation des premier 94 et second 96 écrous de serrage, respectivement, du premier tronçon 904 de la vis fusible 90 et du troisième tronçon 924 de la vis de rétention 92. Sur l'exemple de la figure 10, les filetage 905, 925 des premier 904 et troisième 924 tronçons et les premier 94 et second 96 écrous sont agencés hors de l'embase 70.

En référence à la figure 11, la portion 72 de roue dentée de l'ensemble 10 peut comprendre en outre des permier 910 et second 930 lamages. Le ou les premiers lamages 910 sont configurés pour recevoir la première tête 900 des vis de fusible 90. Le ou les seconds lamages 930 sont configurés pour recevoir la sconde tête 920 des vis de rétention 92. Sur l'exemple de la figure 11, le ou les premiers lamages 910 comprennent une gorge annulaire 980 (par rapport à l'axe Y). La gorge annulaire 980 est de préférence située au-dessus et distante de la première tête 900 de vis 90. Cette gorge 980 peut comprendre un circlip (ou anneau élastique), de façon à éviter que la première tête 900 de vis fusible 90 une fois celle-ci désolidarisée de l'embase 70, ne soit projetée hors de l'ensemble 10 dans le compartiment de la turbomachine.

## Revendications

1. Ensemble (10) pour une hélice (S) de turbomachine d'aéronef, cet ensemble (10) comprenant :
- une aube à calage variable (2) comportant une pale (20) reliée à un pied (22), l'aube (2) comportant un axe longitudinal confondu avec un axe (A) de calage de l'aube (2) qui passe par ledit pied (22),
- une embase (70) solidaire en rotation de l'aube (2) autour de l'axe de calage (A) et reliée à une portion (12) de roue dentée s'étendant autour de cet axe de calage (A), et
- un dispositif de contrepoids (8) comportant un arbre (80) mobile en rotation autour d'un axe (B) sensiblement concourrant et perpendiculaire audit axe de calage (A), cet arbre (80) étant relié à au moins une masselotte (82) et à une portion de pignon (84) engrené avec la portion (72) de roue dentée,
**caractérisé en ce que** la portion (72) de roue dentée est fixée à ladite embase (70) par au moins une vis fusible (90).

2. Ensemble (10) selon la revendication 1, **caractérisé en ce que** la portion (72) de roue dentée est fixée à ladite embase (70) par plusieurs vis fusibles (90).

3. Ensemble (10) selon la revendication 1 ou 2, **caractérisé en ce que** la ou chaque vis fusible (90) s'étend suivant un premier axe d'allongement (Y) qui est parallèle audit axe de calage (A).

4. Ensemble (10) selon l'une quelconque des revendications précédentes, **caractérisé en ce que** la ou chaque vis fusible (90) comprend une première tête (900) en appui sur ladite portion (72) de roue dentée, et un premier corps (902) qui traverse des premiers orifices (790, 791) de cette portion (72) et de l'embase (70).

5. Ensemble (10) selon la revendication précédente, **caractérisé en ce que** ledit premier corps (902) comprend un premier tronçon (904) fileté et vissé dans le premier orifice (790) de l'embase (70), qui est taraudé, et un second tronçon (906) définissant une plus petite section du premier corps (902).

6. Ensemble (10) selon la revendication précédente, **caractérisé en ce que** le second tronçon (906) comprend une rainure annulaire (908a).

7. Ensemble (10) selon la revendication 5, **caractérisé en ce que** le second tronçon (906) comprend au moins un trou (908c).

8. Ensemble (10) selon l'une quelconque des revendications précédentes, **caractérisé en ce qu'**il comprend en outre au moins une vis de rétention (92) de la portion (72) de roue dentée sur l'embase (70), la ou chaque vis de rétention (92) étant non fonctionnelle tant que ladite au moins une vis fusible (90) est non rompue et la ou chaque vis de rétention (92) étant fonctionnelle lorsque ladite au moins une vis fusible (90) est rompue.

9. Ensemble (10) selon la revendication précédente, **caractérisé en ce que** la ou chaque vis de rétention (92) comprend une seconde tête (920) qui est configurée, d'une part, pour être à distance de la portion (72) de roue dentée lorsque ladite au moins une vis fusible (90) est non rompue, et d'autre part, pour être apte à venir en appui et retenir la portion (72) de roue dentée lorsque ladite au moins une vis fusible (90) est rompue.

10. Ensemble (10) selon la revendication 8 ou 9, **caractérisé en ce que** la ou chaque vis de rétention (92) s'étend suivant un second axe d'allongement (Z) qui est parallèle audit axe de calage (A).

11. Ensemble (10) selon l'une quelconque des revendications 8 à 10, **caractérisé en ce que** la ou chaque vis de rétention (92) comprend un second corps (922) qui traverse des seconds orifices (792, 793) de la portion (72) de roue dentée et de l'embase (70).

12. Ensemble (10) selon la revendication précédente, **caractérisé en ce que** ledit second corps (922) comprend un troisième tronçon (924) fileté et vissé dans le second orifice (792) de l'embase (70), qui est taraudé, et un quatrième tronçon (926) non fileté engagé dans le second orifice (793) de la portion (72) de roue dentée.

13. Ensemble (10) selon l'une quelconques des revendications 8 à 12, **caractérisé en ce que** les vis fusibles (90) sont en quinconce avec les vis de rétention (92).

14. Hélice (S) pour une turbomachine (1), en particulier d'aéronef, comportant plusieurs ensembles (10) selon l'une quelconque des revendications précédentes.

## Patentansprüche

1. Baugruppe (10) für einen Propeller (S) einer Turbomaschine eines Luftfahrzeugs, wobei diese Baugruppe (10) umfasst:
- eine Schaufel mit variabler Feststellposition (2), umfassend ein mit einem Fuß (22) verbundenes Blatt (20), wobei die Schaufel (2) eine mit einer Achse (A) der Feststellposition der Schaufel (2) zusammenfallende Längsachse umfasst, die durch den Fuß(22) verläuft,
- eine Grundplatte (70) der Schaufel (2), die um die Achse (A) der Feststellposition herum drehfest und mit einem Abschnitt (12) eines Zahnrads, das sich um diese Achse (A) herum erstreckt, verbunden ist, und
- eine Gegengewichtvorrichtung (8), umfassend eine um eine Achse (B) herum drehbewegliche, im Wesentlichen gleichlaufende und zu der Achse (A) der Feststellposition senkrechte Welle (80), wobei diese Welle (80) mit mindestens einem Fliehgewicht (82) und mit einem Abschnitt eines Getrieberads (84) verbunden ist, das mit dem Abschnitt (72) des Zahnrads in Eingriff vorliegt, **dadurch gekennzeichnet, dass** der Abschnitt (72) des Zahnrads an der Grundplatte (70) durch mindestens eine Schmelzsicherungsschraube (90) befestigt ist.

2. Baugruppe (10) nach Anspruch 1, **dadurch gekennzeichnet, dass** der Abschnitt (72) des Zahnrads mit mehreren Schmelzsicherungsschrauben (90) an der Grundplatte (70) befestigt ist.

3. Baugruppe (10) nach Anspruch 1 oder 2, **dadurch gekennzeichnet, dass** die oder jede Schmelzsicherungsschraube (90) sich entlang einer ersten Verlängerungsachse (Y) erstreckt, die zu der Achse (A) der Feststellposition parallel ist.

4. Baugruppe (10) nach einem der vorstehenden Ansprüche, **dadurch gekennzeichnet, dass** die oder jede Schmelzsicherungsschraube (90) einen ersten Kopf (900) in Anlage an dem Abschnitt (72) des Zahnrads und einen ersten Körper (902) umfasst, der die ersten Öffnungen (790, 791) dieses Abschnitts (72) und der Grundplatte (70) durchquert.

5. Baugruppe (10) nach dem vorstehenden Anspruch, **dadurch gekennzeichnet, dass** der erste Körper (902) ein erstes mit einem Gewinde versehenes und in der ersten Öffnung (790) der Grundplatte (70) verschraubtes Teilstück (904), das mit einem Innengewinde versehen ist, und ein zweites Teilstück (906) umfasst, das eine kleinere Sektion des ersten Körpers (902) definiert.

6. Baugruppe (10) nach dem vorstehenden Anspruch, **dadurch gekennzeichnet, dass** das zweite Teilstück (906) eine ringförmige Rille (908a) umfasst.

7. Baugruppe (10) nach Anspruch 5, **dadurch gekennzeichnet, dass** das zweite Teilstück (906) mindestens ein Loch (908c) umfasst.

8. Baugruppe (10) nach einem der vorstehenden Ansprüche, **dadurch gekennzeichnet, dass** sie weiter mindestens eine Rückhalteschraube (92) des Abschnitts (72) des Zahnrads auf der Grundplatte (70) umfasst, wobei die oder jede Rückhalteschraube (92) nicht funktionell ist, solange die mindestens eine Schmelzsicherungsschraube (90) nicht gebrochen ist und die oder jede Rückhalteschraube (92) funktionell ist, wenn die mindestens eine Schmelzsicherungsschraube (90) gebrochen ist.

9. Baugruppe (10) nach dem vorstehenden Anspruch, **dadurch gekennzeichnet, dass** die oder jede Rückhalteschraube (92) einen zweiten Kopf (920) umfasst, der einerseits konfiguriert ist, um in einem Abstand von dem Abschnitt (72) des Zahnrads vorzuliegen, wenn die mindestens eine Schmelzsicherungsschraube (90) nicht gebrochen ist, und andererseits, um in der Lage zu sein, mit dem Abschnitt (72) des Zahnrads in Anschlag zu kommen und diesen zurückzuhalten, wenn mindestens eine Schmelzsicherungsschraube (90) gebrochen ist.

10. Baugruppe (10) nach Anspruch 8 oder 9, **dadurch gekennzeichnet, dass** die oder jede Rückhalteschraube (92) sich entlang einer zweiten Verlängerungsachse (Z) erstreckt, die zu der Achse (A) der Feststellposition parallel ist.

11. Baugruppe (10) nach einem der Ansprüche 8 bis 10, **dadurch gekennzeichnet, dass** die oder jede Rückhalteschraube (92) einen zweiten Körper (922) umfasst, der die zweiten Öffnungen (792, 793) des Abschnitts (72) des Zahnrads und der Grundplatte (70) durchquert.

12. Baugruppe (10) nach dem vorstehenden Anspruch, **dadurch gekennzeichnet, dass** der zweite Körper (922) ein mit einem Gewinde versehenes und in der zweiten Öffnung (792) der Grundplatte (70) verschraubtes drittes Teilstück (924), das mit einem Innengewinde versehen ist, und ein nicht mit einem Gewinde versehenes, in der zweiten Öffnung (793) des Abschnitts (72) des Zahnrads in Eingriff stehendes viertes Teilstück (926) umfasst.

13. Baugruppe (10) nach einem der Ansprüche 8 bis 12, **dadurch gekennzeichnet, dass** die Schmelzsicherungsschrauben (90) von den Rückhalteschrauben (92) versetzt sind.

14. Propeller (S) für einer Turbomaschine (1), insbesondere eines Luftfahrzeugs, das mehrere Baugruppen (10) nach einem der vorstehenden Ansprüche umfasst.

## Claims

1. An assembly (10) for a propeller (S) of a turbine engine of an aircraft, this assembly (10) comprising:
- a variable-pitch vane (2) comprising a blade (20) connected to a root (22), the vane (2) comprising a longitudinal axis coincident with a pitch axis (A) of the vane (2) which passes through said root (22),
- a base (70) secured in rotation to the vane (2) about the pitch axis (A) and connected to a toothed wheel portion (12) extending about this pitch axis (A), and
- a counterweight device (8) comprising a shaft (80) movable in rotation about a substantially concurrent axis (B) perpendicular to said pitch axis (A), this shaft (80) being connected to at least one weight (82) and to a pinion portion (84) geared with the toothed wheel portion (72),
**characterised in that** the toothed wheel portion (72) is attached to said base (70) by at least one shear bolt (90).

2. The assembly (10) according to claim 1, **characterised in that** the toothed wheel portion (72) is attached to said base (70) by a plurality of shear bolts (90).

3. The assembly (10) according to claim 1 or 2, **characterised in that** the or each shear bolt (90) extends along a first axis of elongation (Y) which is parallel to said pitch axis (A).

4. The assembly (10) according to any one of the preceding claims, **characterised in that** the or each shear bolt (90) comprises a first head (900) bearing on said toothed wheel portion (72), and a first body (902) which passes through first orifices (790, 791) of this portion (72) and of the base (70).

5. The assembly (10) according to the preceding claim, **characterised in that** said first body (902) comprises a first segment (904) threaded and screwed into the first orifice (790) of the base (70), which is tapped, and a second segment (906) defining a smaller section of the first body (902).

6. The assembly (10) according to the preceding claim, **characterised in that** the second segment (906) comprises an annular groove (908a).

7. The assembly (10) according to claim 5, **characterised in that** the second segment (906) comprises at least one hole (908c).

8. The assembly (10) according to any one of the preceding claims, **characterised in that** it further comprises at least one retention screw (92) for retaining the toothed wheel portion (72) on the base (70), the or each retention screw (92) being non-functional as long as said at least one shear bolt (90) is unbroken and the or each retention screw (92) being functional when said at least one shear bolt (90) is broken.

9. The assembly (10) according to the preceding claim, **characterised in that** the or each retention screw (92) comprises a second head (920) which is configured, on the one hand, to be at a distance from the toothed wheel portion (72) when said at least one shear bolt (90) is not broken, and, on the other hand, to be able to come to bear on and retain the toothed wheel portion (72) when said at least one shear bolt (90) is broken.

10. The assembly (10) according to claim 8 or 9, **characterised in that** the or each retention screw (92) extends along a second axis of elongation (Z) which is parallel to said pitch axis (A).

11. The assembly (10) according to any one of claims 8 to 10, **characterised in that** the or each retention screw (92) comprises a second body (922) which passes through second orifices (792, 793) in the toothed wheel portion (72) and in the base (70).

12. The assembly (10) according to the preceding claim, **characterised in that** said second body (922) comprises a third segment (924) threaded and screwed into the second orifice (792) of the base (70), which is tapped, and a fourth non-threaded segment (926) engaged in the second orifice (793) of the toothed wheel portion (72).

13. The assembly (10) according to any one of claims 8 to 12, **characterised in that** the shear bolts (90) are staggered with the retention screws (92).

14. A propeller (S) for a turbine engine (1), in particular for an aircraft, comprising several assemblies (10) according to any one of the preceding claims.
